# EUROPÄISCHE PATENTSCHRIFT

(11) **EP 1 736 044 B1**
(45) Veröffentlichungstag und Bekanntmachung des Hinweises auf die Patenterteilung: **03.09.2008**
(21) Anmeldenummer: 06007074.5
(22) Anmeldetag: 03.04.2006
(51) Int. Cl.: A01D 41/127

(54) **Verfahren und Vorrichtung zur Ermittlung der Körnerverluste an einem Mähdrescher**
Method and apparatus for determining grain loss in a combine
Procédé et dispositif de détermination des pertes de grain dans une moissonneuse-batteuse

(30) Priorität: 21.06.2005 DE 102005028997
(43) Veröffentlichungstag der Anmeldung: 27.12.2006
(73) Patentinhaber: CLAAS Selbstfahrende Erntemaschinen GmbH, 33428 Harsewinkel (DE)
(72) Erfinder: Piontek, Michael, 23701 Zarnekau (DE)

(56) Entgegenhaltungen:
- DD-A- 52 020
- DE-A1- 10 062 114
- US-A- 4 393 704
- US-A- 5 951 395

## Beschreibung

Die Erfindung bezieht sich auf ein Verfahren und eine Vorrichtung zur Ermittlung der Körnerverluste an einem Mähdrescher mit Hilfe von einer Prüfschale, nach dem Oberbegriff des Patentanspruchs 1.

Ein derartiges Verfahren ist bereits aus der DE 100 62 114 A1 bekannt. Hierbei sind an geeigneten Stellen am Mähdrescher eine oder mehrere Prüfschalen arretierbar an Haltevorrichtungen befestigt. Nach dem Lösen der Verriegelung werden die Prüfschalen vom Fahrerstand aus durch den Mähdrescherfahrer an beliebigen Messstellen auf den Feldboden abgeworfen und anschließend die in den Prüfschalen aufgefangenen Körnerverlust ermittelt. Aufgrund des jeweiligen Messergebnisses werden dann am Mähdrescher die Einstellungen der verschiedenen Arbeitsorgane vorgenommen oder die Werte werden für die Kalibrierung der am Mähdrescher vorhandenen elektronischen Verlustmesseinrichtung verwendet. Da bei diesem Verfahren die Prüfschalen auf die beim Erntevorgang üblichen verhältnismäßig langen und damit wenig tragfähigen Stoppeln abgelegt werden, ist eine zuverlässige Lagesicherung auf der labilen Stoppeloberfläche nicht möglich, so dass bei der Ermittlung der Körnerverlust entsprechende ungenaue Ergebnisse auftreten, die zu Fehleinstellungen und damit zu keiner optimalen Betriebsweise des Mähdreschers führen.

Die Aufgabe der Erfindung besteht darin, eine sichere Ablageposition der Prüfschale zu erreichen und damit eine exakte Körnerverlustmessung zu ermöglichen.

Diese Aufgabe wird durch die im Patentanspruch 1 genannten kennzeichnenden Verfahrensschritte sowie eine Vorrichtung nach Anspruch 4 gelöst. Weitere vorteilhafte Ausgestaltungen ergeben sich aus den nachgeordneten Ansprüchen.

Indem dem Mähdrescher eine Prüfschale zugeordnet ist und vor Ablage der Prüfschale das Schneidwerk (15) auf eine minimale Schnitthöhe abgesenkt wird und mit dieser minimalen Schnitthöhe das Erntegut im Bereich der späteren Ablagefläche der Prüfschale abgeschnitten und anschließend in diesem Bereich die Prüfschale abgelegt wird, kann sichergestellt werden, dass die Prüfschale auf einer ebenen Unterlagen verkippungsfrei ablegbar ist. Dies hat insbesondere den Vorteil, dass die Qualität der Kornverlustmessung verbessert wird, da nunmehr ein Verrollen oder Herausfallen von Erntegut aus der Prüfschale weitgehend vermieden wird.

In einer vorteilhaften Ausgestaltung der Erfindung wird die Steuerung des Senk- und Hebevorganges für das Schneidwerk sowie das Lösen der Verriegelung für die Haltevorrichtung und die Ablage der Prüfschale nach Betätigung eines Schalters durch den Mähdrescherfahrer selbsttätig durch den Bordcomputer realisiert. Damit vereinfacht sich die Handhabung der Prüfschale für den Betreiber des Mähdreschers erheblich, da dieser nur noch durch Schalterbetätigung den Ablagevorgang startet, während die notwendigen Tätigkeiten ohne das unmittelbare Einbeziehen des Betreibers abgearbeitet werden.

Damit stets eine normierte Wegstrecke zur Ermittlung der Kornverluste von dem Mähdrescher zurückgelegt wird, ist in einer vorteilhaften Ausgestaltung der Erfindung vorgesehen, dass die zurückzulegende Wegstrecke des Mähdreschers zwischen dem Zeitpunkt der Ablage der Prüfschale und dem Stillstand des Mähdreschers durch den Bordcomputer vorgegeben wird.

Eine konstruktiv einfache Ausführung einer Vorrichtung zur Durchführung des erfindungsgemäßen Verfahrens ergibt sich dann, wenn die zumindest eine Prüfschale am Mähdrescher an einer Haltevorrichtung angeordnet ist, deren Ver- und Entriegelung an ausgewählten Messstellen durch den Mähdrescherfahrer vom Fahrerstand ausgelöst werden kann und das Schneidwerk zur Herausarbeitung der Ablagefläche für die Prüfschale höhenbeweglich an dem Mähdrescher angeordnet ist.

In einer vorteilhaften Weiterbildung der Erfindung ist die Prüfschale im rückwärtigen Bereich des Schneidwerks an dem Mähdrescher (1) positioniert, sodass zur Ausrichtung der Prüfschale auf dem Boden eine ausreichende Zeitspanne zur Verfügung steht, bevor das den Mähdrescher im rückwärtigen Bereich verlassende Erntegut auf die Prüfschale fällt. Damit wird unter dem Gesichtspunkt einer verbesserten Kornverlustermittlung sichergestellt, dass die Prüfschale vor der Aufnahme des Erntegutes eine sichere Lage auf dem Boden erreicht hat.

Um die Arbeitsqualität spezieller Arbeitsorgane des Mähdreschers präzise ermitteln zu können, ist in einer vorteilhaften Ausgestaltung der Erfindung vorgesehen, dass dem Mähdrescher eine Vielzahl von Prüfschalen zugeordnet sind und die Prüfschalen unabhängig voneinander auf dem Boden ablegbar sind. Eine solche Ausführung gewinnt insbesondere dann an Bedeutung, wenn die Arbeitsqualität der Trenneinrichtung, wie etwa Hordenschüttler oder Axialflusstrennrotor, und die Arbeitsqualität der Reinigungseinrichtung unabhängig voneinander ermittelt werden soll. In diesem Fall werden separate Prüfschalen in einer speziellen Reihenfolge und Position auf dem Feldboden abgelegt, sodass nahezu unabhängig voneinander die Erntegutströme der Trenneinrichtung und der Reinigungseinrichtung aufgefangen werden können.

Zur Reduzierung des Verrollens der Körner in den aufgefangenen Erntegutströmen können die Prüfschalen in ihrem Auffangbereich mit Längs- und Querrippen versehen sein. Dies hat den Vorteil, dass die Arbeitsqualität der Arbeitsorgane auch bereichsweise beurteilt werden kann. Derartige Informationen sind geeignete Indizien für bereichsweise Defekte der Arbeitsorgane, wie etwa Verstopfungen oder einseitige Gutförderung in dem Arbeitsorgan wegen einseitiger Beschickung des jeweiligen Arbeitsorgans.

Die Flexibilität des Einsatzes der Prüfschalen wird auch dadurch noch erhöht, wenn der Betreiber über den Bordcomputer die Entriegelung einer definierten Prüfschale oder einer definierten Anzahl von Prüfschalen auslösen kann.

Die Erfindung wird nachstehend an einem Ausführungsbeispiel näher erläutert. In der zugehörigen Zeichnung zeigen:
- Fig. 1 -: eine Längsschnittdarstellung eines Mähdreschers mit den verschiedenen Arbeitsorganen und Einrichtungen zur Ermittlung der Körnerverluste sowie der auf der Ablagefläche abgelegten Prüfschale
- Fig. 2 -: den vorderen Bereich eines Mähdreschers mit dem Schneidwerk in normaler Schnitthöhenposition und unterhalb des Schrägförderers angeordneter Prüfschale
- Fig. 3 -: den vorderen Bereich eines Mähdreschers mit dem Schneidwerk in minimaler Schnitthöhenposition und unterhalb des Schrägförderers angeordneter Prüfschale und
- Fig. 4 -: eine Längsschnittdarstellung eines Mähdreschers mit dem Schneidwerk mit normaler Schnitthöhe, der Prüfschale in Ablageposition sowie der Ablagefläche mit geringer Stoppelhöhe.

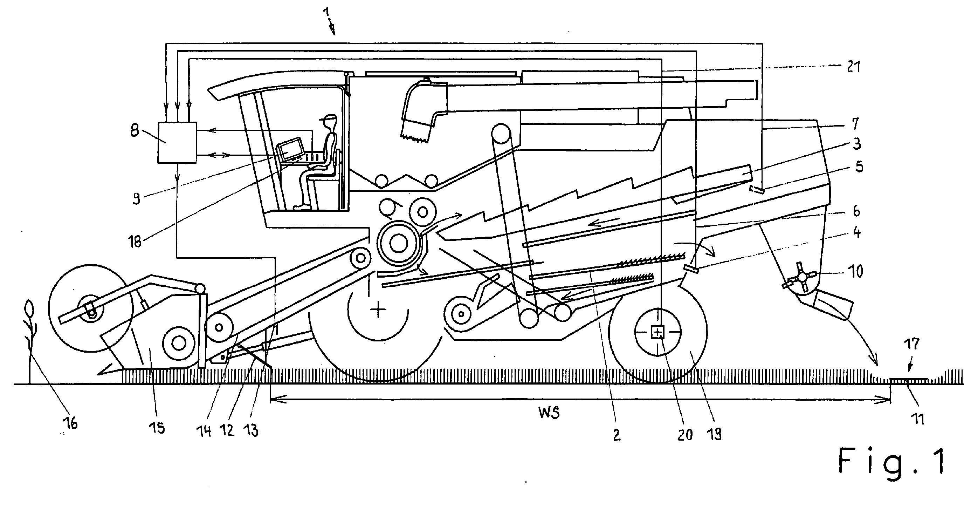

Bei einem Mähdrescher 1 bekannter Bauart werden die am Obersieb 2 der Reinigungseinrichtung und an den Strohschüttlern 3 auftretenden Körnerverluste durch Sensoren 4,5, erfasst und die durch den Aufprall der Körner ausgelösten Impulse in elektrische Signale umgewandelt und diese über Elektroleitungen 6,7 zum Bordcomputer 8 übertragen . Auf einem Bildschirm 9 werden die jeweiligen Körnerverluste dem Mähdrescherfahrer angezeigt. Da die Anzeigewerte jedoch nur die Tendenzen der Verluste darstellen, müssen diese Werte in absolute Messgrößen gewandelt werden. Dies geschieht dadurch, dass das den Mähdrescher 1 am Ende des Obersiebes 2, an den Strohschüttlern 3 und am Strohhäcksler 10 verlassende Kurzstroh-Spreu-Gemisch mit den noch darin befindlichen Körnern in einer Prüfschale 11 teilweise aufgefangen und anschließend die tatsächlich angefallene Körnerverlustmenge ermittelt wird (Fig. 1).

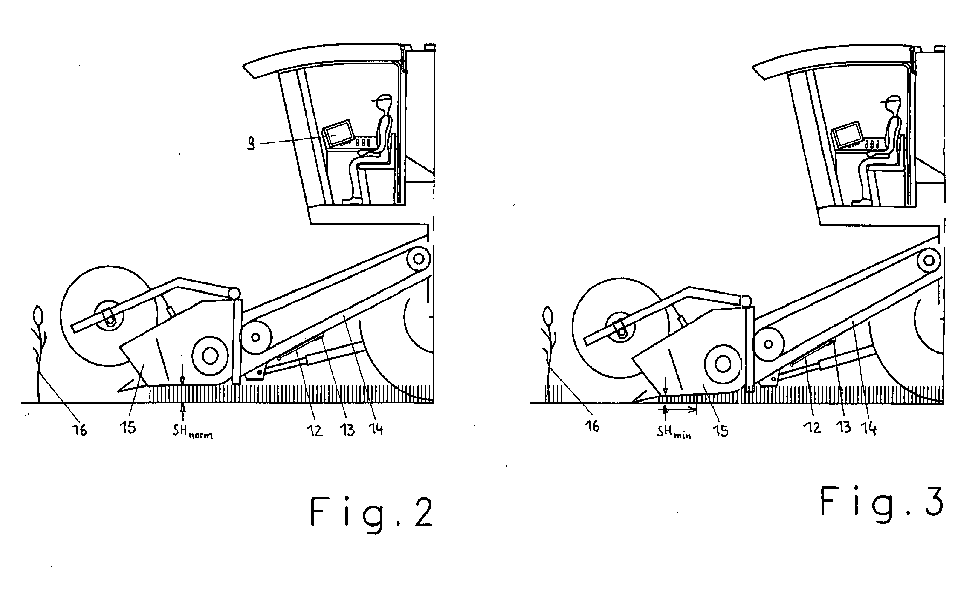

Die Prüfschale 11 ist vor dem Beginn des Messvorganges an einer schwenkbaren Haltevorrichtung 12 mit lösbarer Verriegelung 13 unterhalb des Schrägförderers 14 angeordnet (Fig. 2).

Vor der Ablage der Prüfschale 11 auf dem Feldboden wird das Schneidwerk 15 von der normalen Schnitthöhe SHₙₒᵣₘ auf eine minimale Schnitthöhe SHₘᵢₙ abgesenkt, so dass das Schneidwerk 15 das Erntegut 16 im Bereich der späteren Ablagefläche 17 der Prüfschale 11 möglichst kurz über dem Feldboden abschneidet, wodurch eine niedrige Stoppelhöhe mit einer lagesicheren Auflage für die Prüfschale 11 entsteht (Fig. 3).

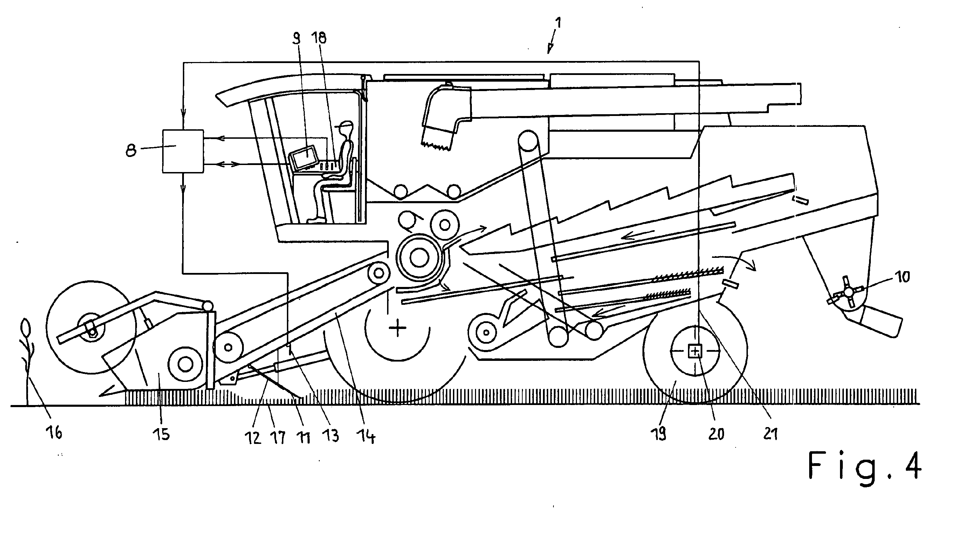

Anschließend wird das Schneidwerk 15 wieder in die übliche Arbeitstellung angehoben, so dass das Erntegut 16 wieder mit der normalen Schnitthöhe SHₙₒᵣₘ geschnitten wird. Sobald sich die Prüfschale 11 oberhalb der Ablagefläche 17 befindet, wird die Verriegelung 13 der Haltevorrichtung 12 gelöst, wodurch die Prüfschale 11 durch die Eigenmasse und die nach unten schwenkende Haltevorrichtung 12 auf die Ablagefläche 17 gleitet (Fig. 4).

Die Steuerung des Senk- und Hebevorganges des Schneidwerkes 15 sowie das Lösen der Verriegelung 13 der Haltevorrichtung 12 und die Ablage der Prüfschale 11 bei Volllast des Mähdreschers 1 erfolgt nach Betätigung eines Schalters durch den Mähdrescherfahrer selbsttätig in der erforderlichen Größe und Zeitspanne durch den Bordcomputer 8. Vorzugsweise leuchtet am Bedienpult 18 nach der Betätigung des Schalters eine Kontrolllampe auf, die nach der erfolgten Ablage der Prüfschale 11 wieder erlischt. Nachdem der Mähdrescher 1 die für den Messvorgang erforderliche Wegstrecke WS zurückgelegt hat und ein Teil der aus dem Mähdrescher 1 ausgetragenen Erntegutbestandteile auf der Prüfschale 11 abgelegt ist, wird auf dem Bildschirm 9 ein Stoppsignal für den Fahrantrieb angezeigt. Der Mähdrescherfahrer unterbricht daraufhin den Antrieb für das Fahrwerk, so dass der Mähdrescher 1 zum Stillstand kommt. Zusätzlich wird die nach dem Ablegen der Prüfschale 11 bis zum Stillstand des Mähdreschers 1 zurückgelegte Wegstrecke WS gemessen und ebenfalls auf dem Bildschirm 9 angezeigt, so dass der Mähdrescherfahrer die Prüfschale 11 auf dem Feldboden leicht auffinden kann. Durch ein an der Prüfschale 11 angebrachtes farbiges Markierungsband, das längs zur Fahrtrichtung mit ausgelegt wird, wird das Auffinden der Prüfschale 11 noch zusätzlich erleichtert. Die Wegstrecke WS wird über einen im Bereich der Hinterräder 19 angeordneten Sensor 20 ermittelt., der die erfolgten Umdrehungen der Hinterräder 19 erfasst und die ausgelösten Signale über eine Elektroleitung 21 an den Bordcomputer 8 weiterleitet. Die minimal zurückgelegte Wegstrecke WS nach der Ablage der Prüfschale 11 richtet sich nach dem jeweiligen Erntegut 16 und den unterschiedlichen Erntebedingungen und wird durch die Einstellwerte des Bordcomputers 8 vorgegeben.

Nachdem die für den Messvorgang erforderliche Fahrstrecke zurückgelegt ist und das ausgedroschene Erntegut eines Bereiches auf der Prüfschale 11 abgelegt ist, wird die Prüfschale 11 vom Feldboden durch den Mähdrescherfahrer aufgenommen und die darin enthaltenen Körnerverluste in bekannter Weise ermittelt und auf der Grundlage der festgestellten tatsächlichen Verluste das elektronische Verlustmessgerät entsprechend kalibriert.

Danach wird die Prüfschale wieder mit der nach unten geschwenkten Haltevorrichtung 12 verbunden, diese nach oben bis an den Schrägförderer 14 geschwenkt und die Verriegelung 13 geschlossen. Damit für die Durchführung dieser Arbeiten ein ausreichender Freiraum vorhanden ist, wird der Schrägförderer 14 vorher in seine oberste Stellung angehoben.

Bezugszeichenliste:
- 1: Mähdrescher
- 2: Obersieb
- 3: Strohschüttler
- 4,5: Sensoren
- 6,7: Elektroleitungen
- 8: Bordcomputer
- 9: Bildschirm
- 10: Strohhäcksler
- 11: Prüfschale
- 12: Haltevorrichtung
- 13: Verriegelung
- 14: Schrägförderer
- 15: Schneidwerk
- 16: Erntegut
- 17: Ablagefläche
- 18: Bedienpult
- 19: Hinterräder
- 20: Sensor
- 21: Elektroleitung
- SHₘᵢₙ: Minimale Schnitthöhe
- SHₙₒᵣₘ: Normale Schnitthöhe
- WS: Wegstrecke

## Patentansprüche

1. Verfahren zur Ermittlung der Körnerverluste an einem Mähdrescher mit Hilfe einer Prüfschale, in der die auftretenden Kornverluste eines wahlweisen Bereiches aufgefangen und anschließend deren Menge festgestellt wird, wobei die Prüfschale am Mähdrescher an einer Haltevorrichtung angeordnet ist, deren Ver- und Entriegelung an ausgewählten Messstellen durch den Mähdrescherfahrer vom Fahrerstand ausgelöst wird, wodurch die Prüfschale auf dem Boden abgelegt wird,
**gekennzeichnet durch** folgende Verfahrensschritte:
a) vor der Ablage der Prüfschale (11) wird das Schneidwerk (15) auf eine minimale Schnitthöhe (SHₘᵢₙ) abgesenkt,
b) im Bereich der späteren Ablagefläche (17) der Prüfschale (11) wird das Erntegut (16) mit einer minimalen Schnitthöhe (SHₘᵢₙ) abgeschnitten,
c) anschließend wird das Schneidwerk (15) wieder auf die normale Schnitthöhe (SHₙₒₘ) angehoben,
d) die Verriegelung (13) der Haltevorrichtung (12) für die Prüfschale (11) wird gelöst,
e) die Prüfschale (11) wird auf die Ablagefläche (17) abgelegt,
f) der Mähdrescher (1) wird wenigstens teilweise über die Prüfschale (11) hinwegbewegt,
g) die Prüfschale (11) wird von der Ablagefläche (17) aufgenommen und die darin enthaltenen Körnerverluste ermittelt.

2. Verfahren zur Ermittlung der Körnerverluste an einem Mähdrescher nach Anspruch 1,
**dadurch gekennzeichnet,**
**dass** das die Steuerung des Senk- und Hebevorganges für das Schneidwerk (15) sowie das Lösen der Verriegelung (13) für die Haltevorrichtung (12) und die Ablage der Prüfschale (11) nach Betätigung eines Schalters durch den Mähdrescherfahrer selbsttätig durch den Bordcomputer (8) erfolgt.

3. Verfahren zur Ermittlung der Körnerverluste an einem Mähdrescher nach Anspruch 1,
**dadurch gekennzeichnet,**
**dass** die zurückzulegende Wegstrecke (WS) des Mähdreschers (1) zwischen dem Zeitpunkt der Ablage der Prüfschale (11) und dem Stillstand des Mähdreschers (1) durch den Bordcomputer (8) vorgegeben wird.

4. Vorrichtung zur Durchführung des Verfahrens nach Anspruch 1, **dadurch gekennzeichnet, dass** die Steuerung des Senk- und Hebevorganges des Schneidwerkes (15) sowie das Lösen der Verriegelung (13) der Haltevorrichtung (12) und die Ablage der Prüfschale (11) nach Betätigung eines Schalters durch den Mähdrescherfahrer selbsttätig durch den Bordcomputer (8) erfolgt,
**dadurch gekennzeichnet,**
**dass** die Prüfschalen (11) Längs- und Querrippen aufweisen.

5. Vorrichtung zur Ermittlung der Körnerverluste an einem Mähdrescher nach einem der vorhergehenden Ansprüche,
**dadurch gekennzeichnet,**
**dass** die Prüfschale (11) im rückwärtigen Bereich des Schneidwerks (15) an dem Mähdrescher (1) positioniert ist.

6. Vorrichtung zur Ermittlung der Körnerverluste an einem Mähdrescher nach einem der vorhergehenden Ansprüche,
**dadurch gekennzeichnet,**
**dass** dem Mähdrescher (1) eine Vielzahl von Prüfschalen (11) zugeordnet sind und die Prüfschalen (11) unabhängig voneinander auf dem Boden abgelegt werden können.

7. Vorrichtung zur Ermittlung der Körnerverluste an einem Mähdrescher nach einem der vorhergehenden Ansprüche,

8. Vorrichtung zur Ermittlung der Körnerverluste an einem Mähdrescher nach einem der vorhergehenden Ansprüche,
**dadurch gekennzeichnet,**
**dass** der Betreiber über den Bordcomputer (8) die Entriegelung einer definierten Prüfschale (11) oder einer definierten Anzahl von Prüfschalen (11) auslösen kann.

## Claims

1. A method of determining the grain losses on a combine harvester by means of a test tray in which the occurring grain losses of a selective region are caught and then the amount thereof is established, wherein the test tray is arranged on the combine harvester at a holding device whose locking and unlocking is triggered at selected measurement locations by the combine harvester driver from the driving position, whereby the test tray is deposited on the ground,
**characterised by** the following method steps:
a) prior to the deposit of the test tray (11) the cutting mechanism (15) is lowered to a minimum cutting height (SHₘᵢₙ),
b) in the region of the later deposit surface (17) of the test tray (11) the crop material (16) is cut off at a minimum cutting height (SHₘᵢₙ),
c) then the cutting mechanism (15) is raised again to the normal cutting height (SHₙₒᵣₘ),
d) the locking means (13) of the holding device (12) for the test tray (11) is released,
e) the test tray (11) is deposited on the deposit surface (17),
f) the combine harvester (1) is moved at least partially beyond the test tray (11), and
g) the test tray (11) is picked up from the deposit surface (17) and the grain losses contained therein are determined.

2. A method of determining the grain losses on a combine harvester according to claim 1 **characterised in that** control of the lowering and lifting operation for the cutting mechanism (15) as well as release of the locking means (13) for the holding device (12) and deposit of the test tray (11) is effected automatically by the on-board computer (8) after actuation of a switch by the combine harvester driver.

3. A method of determining the grain losses on a combine harvester according to claim 1 **characterised in that** the travel distance (WS) to be covered by the combine harvester (1) between the moment of deposit of the test tray (11) and stoppage of the combine harvester (1) is predetermined by the on-board computer.

4. Apparatus for carrying out the method according to claim 1 **characterised in that** control of the lowering and lifting operation of the cutting mechanism (15) as well as release of the locking means (13) for the holding device (12) and deposit of the test tray (11) is effected automatically by the on-board computer (8) after actuation of a switch by the combine harvester driver.

5. Apparatus for determining the grain losses on a combine harvester according to one of the preceding claims **characterised in that** the test tray (11) is positioned in the rearward region of the cutting mechanism (15) on the combine harvester (1).

6. Apparatus for determining the grain losses on a combine harvester according to one of the preceding claims **characterised in that** a multiplicity of test trays (11) are associated with the combine harvester (1) and the test trays (11) can be deposited on the ground independently of each other.

7. Apparatus for determining the grain losses on a combine harvester according to one of the preceding claims **characterised in that** the test trays (11) have longitudinal and transverse ribs.

8. Apparatus for determining the grain losses on a combine harvester according to one of the preceding claims **characterised in that** the operator can trigger unlocking of a defined test tray (11) or a defined number of test trays (11) by way of the on-board computer (8).

## Revendications

1. Procédé permettant de déterminer les pertes de grains dans une moissonneuse-batteuse à l'aide d'un bac de contrôle, dans lequel les pertes de grains dans une zone au choix se produisant sont récupérées et leur quantité est ensuite évaluée, le bac de contrôle étant disposé dans la moissonneuse-batteuse au niveau d'un dispositif de fixation dont le verrouillage et le déverrouillage à des emplacements de mesure sélectionnés sont déclenchés par le conducteur de la moissonneuse-batteuse depuis sa cabine, moyennant quoi le bac de contrôle est déposé sur le sol,
**caractérisé par** les étapes de procédé suivantes :
a) avant le dépôt du bac de contrôle (11), la barre de coupe (15) est abaissée à une hauteur de coupe minimale (SHₘᵢₙ),
b) dans la zone de la surface de dépôt ultérieur (17) du bac de contrôle (11), la récolte (16) est coupée à une hauteur de coupe minimale (SHₘᵢₙ),
c) la barre de coupe (15) est ensuite relevée à la hauteur de coupe normale (SHₙₒᵣₘ),
d) le verrouillage (13) du dispositif de fixation (12) pour le bac de contrôle (11) est libéré,
e) le bac de contrôle (11) est déposé sur la surface de dépôt (17),
f) la moissonneuse-batteuse (1) est déplacée au moins partiellement par-dessus le bac de contrôle (11),
g) le bac de contrôle (11) est soulevé de la surface de dépôt (17) et les pertes de grains contenues à l'intérieur sont évaluées.

2. Procédé permettant de déterminer les pertes de grains dans une moissonneuse-batteuse selon la revendication 1,
**caractérisé en ce**
**que** la commande du processus d'abaissement et de levage pour la barre de coupe (15), ainsi que la libération du verrouillage (13) pour le dispositif de fixation (12) et le dépôt du bac de contrôle (11), sont effectués automatiquement après l'actionnement d'un commutateur par le conducteur de la moissonneuse-batteuse à l'aide de l'ordinateur de bord (8).

3. Procédé permettant de déterminer les pertes de grains dans une moissonneuse-batteuse selon la revendication 1,
**caractérisé en ce**
**que** la distance (WS) à parcourir par la moissonneuse-batteuse (1) entre le moment du dépôt du bac de contrôle (11) et l'arrêt de la moissonneuse-batteuse (1) est fixée à l'aide de l'ordinateur de bord (8).

4. Dispositif permettant de mettre en oeuvre du procédé selon la revendication 1, **caractérisé en ce que** la commande du processus d'abaissement et de levage de la barre de coupe (15), ainsi que la libération du verrouillage (13) du dispositif de fixation (12) et le dépôt du bac de contrôle (11), sont effectués après l'actionnement d'un commutateur par le conducteur de la moissonneuse-batteuse automatiquement à l'aide de l'ordinateur de bord (8).

5. Dispositif permettant de déterminer les pertes de grains dans une moissonneuse-batteuse selon l'une quelconque des revendications précédentes,
**caractérisé en ce**
**que** le bac de contrôle (11) est positionné dans la zone arrière de la barre de coupe (15) au niveau de la moissonneuse-batteuse (1).

6. Dispositif permettant de déterminer les pertes de grains dans une moissonneuse-batteuse selon l'une quelconque des revendications précédentes,
**caractérisé en ce**
**qu'**une pluralité de bacs de contrôle (11) est associée à la moissonneuse-batteuse (1) et les bacs de contrôle (11) peuvent être déposés sur le sol indépendamment les uns des autres.

7. Dispositif permettant de déterminer les pertes de grains dans une moissonneuse-batteuse selon l'une quelconque des revendications précédentes,
**caractérisé en ce**
**que** les bacs de contrôle (11) comprennent des nervures longitudinales et transversales.

8. Dispositif permettant de déterminer les pertes de grains dans une moissonneuse-batteuse selon l'une quelconque des revendications précédentes,
**caractérisé en ce**
**que**, par l'intermédiaire de l'ordinateur de bord (8), l'opérateur peut déclencher le déverrouillage d'un bac de contrôle (11) défini ou d'un nombre défini de bacs de contrôle (11).
